# EUROPÄISCHE PATENTSCHRIFT

(11) **EP 0 611 846 B1**
(45) Veröffentlichungstag und Bekanntmachung des Hinweises auf die Patenterteilung: **09.09.1998**
(21) Anmeldenummer: 94101274.2
(22) Anmeldetag: 28.01.1994
(51) Int. Cl.: D21H 19/18, D21H 19/20, D21H 19/82, D21H 27/10

(54) **Beschichtungszusammensetzung für Papier**
Coating composition for paper
Composition de revêtement pour papier

(30) Priorität: 10.02.1993 DE 4303834
(43) Veröffentlichungstag der Anmeldung: 24.08.1994
(73) Patentinhaber: WOLFF WALSRODE AKTIENGESELLSCHAFT, D-29699 Walsrode (DE)
(72) Erfinder: Weber, Gunter, Dr., D-29683 Fallingbostel (DE); Reiners, Ulrich, Dr., D-29643 Neuenkirchen (DE); Meyer-Stork, Sebastian, Dr., D-33659 Bielefeld (DE)
(74) Vertreter: Braun, Rolf, Dr.

(56) Entgegenhaltungen:
- EP-A- 0 393 451
- EP-A- 0 557 819
- EP-A- 0 557 846
- US-A- 3 010 860

## Beschreibung

Die Erfindung betrifft eine Beschichtungszusammensetzung für Papier mit mehreren Komponenten, wobei der einmalige Materialauftrag zu einer Mehrschichtstruktur der Lackauflage führt, sowie die Verwendung des beschichteten Papiermaterials für die Herstellung masserdampf- und aromadichter Verpackungen.

Vor allem aus dem Bereich der Automobil-Lackierung sind Beschichtungssysteme für Metalle bekannt, deren unverträgliche Komponenten sich beim einmaligen Lackauftrag so entmischen, daß eine Mehrschichtstruktur der Auflage entsteht. Beschrieben werden geeignete Systeme z.B. in GB-A-1 570 540 und GB-A-2 046 765A als Pulverlacke sowie in GB-A-2 192 399A auf Lösungsmittelbasis. Die eindeutige Positionierung jeder Komponente im Schichtaufbau hängt von dem Verhältnis der spezifischen Oberflächenenergien ab: während der Bestandteil mit dem niedrigsten Wert die oberste Schicht bildet, orientiert sich die Komponente mit dem relativ höchsten Wert zum - hier polar angenommen - Untergrund.

Meßtechnisch läßt sich die spezifische Oberflächenenergie leicht als Oberflächenspannung σ erfassen (Römpp Chemie Lexikon, Band 4, G. Thieme Verlag, Stuttgart (1991), Seiten 3075 bis 3076).

Das Auffinden von Materialkombinationen mit geeigneter Oberflächenspannungs-Abstufung wird im Falle der Metallbeschichtung dadurch erleichtert, daß diese Substrate extrem hohe spezifische Oberflächenenergien aufweisen. So liegen gemäß Handbook of Chemistry and Physics, 56. Ed., CRC Press, Cleveland (1975), S. F 23 bis 46, die Werte für Aluminium bei 870 und für Eisen bei 1700 mN/m.

Für nichtmetallisch polare Substrate wie beispielsweise Papier bestehen diesbezüglich wesentlich ungünstigere Verhältnisse, da die Oberflächenspannungen allgemein um den Faktor 10 bis 15 geringer sind.

Beim Einsatz von Papier, Karton und Pappe im Verpackungsbereich ist es zum Schutz des Füllgutes häufig erforderlich, daß u.a. eine hohe Wasserdampf- und Aroma-Dichtigkeit erreicht wird. Solche Sperrschicht-Eigenschaften lassen sich bekanntermaßen durch Beschichtungen erzielen, wozu bislang vor allem Polyvinylidenchlorid (PVDC) enthaltende Systeme verwendet werden. Aus ökologischen Gründen besteht aber der Bedarf, für diesen Zweck organohalogenfreie Auflagen einzusetzen.

Alternativ zu den PVDC-Auflagen sind Polyethylen-Extrusionsbeschichtungen zur Verbesserung der Barriere-Eigenschaften von Papier, Karton und Pappe bekannt, die jedoch aufgrund der hierbei notwendigen hohen Auftragsgewichte hinsichtlich ihrer Rezyklierbarkeit auf mangelnde Akzeptanz stoßen.

Als weitere Alternative zu den PVDC-Auflagen gibt es chlorfreie Beschichtungen, deren Wasserdampf-Sperrwirkung durch die Verwendung fluorierter Kohlenwasserstoffe (z.B. EP-A-0 462 063) erreicht wird und die insofern dem Organohalogenfrei-Anspruch nicht genügen.

EP-A-0 393 451 beschreibt wässrige, organohalogenfreie Beschichtungen auf Basis von Mischungen aus Paraffin-und Styrolbutadien-Dispersionen, die zu einer wasserdampf- und aromadichten Papier-Ausstattung führen. Diese Auflagen sind jedoch aufgrund des relativ hohen Wachsanteils (≥ 20 % bezogen auf das Copolymer) vergleichsweise spröde und damit knickbruchempfindlich. Zum Ausgleich müssen der Beschichtung Polyacrylate zugesetzt werden, die bekanntermaßen die Wasserdampf-Dichtigkeit negativ beeinflußen. Wegen des niedrigen Schmelzpunktes der Paraffin-Komponente (52 bis 56°C) weist die Beschichtung außerdem eine limitierte Hitzeresistenz auf.

Es ist daher die Aufgabe der vorliegenden Erfindung, wässrige und organohalogenfreie Beschichtungen für Papier zur Verfügung zu stellen, die zu einer wasserdampf- und aromadichten Auflage mit verbesserter Knickfestigkeit und Hitzeresistenz führen.

Die erfindungsgemäße Lösung der Aufgabe gelingt insbesondere dadurch, daß zur Beschichtung des Papiers Zusammensetzung eingesetzt werden, die eine hochschmelzende Wachskomponente und ein copolymeres Bindemittel enthalten. Bei der Verfilmung des Lackes entsteht aufgrund der entsprechend abgestuften Oberflächenspannungen eine Mehrschichtstruktur mit dem Wachs als Wasserdampf-Sperrschicht an der freien Oberfläche und dem Copolymer auf dem Cellulose-Untergrund. So wird eine ausgezeichnete, hitzeresistente Wasserdampf-Barriere mit einem vergleichsweise deutlich reduzierten Wachsanteil realisiert, wodurch es zu einer guten Knickfestigkeit der Auflage auch ohne weitere Zusätze kommt.

Gegenstand der Erfindung ist daher eine durch einmaligen Auftrag aufzubringende, aus mehreren Komponenten bestehende wäßrige und organo-halogenfreie Beschichtungszusammensetzung für Papier, die zur Ausbildung einer Mehrschichtstruktur führt, dadurch gekennzeichnet, daß die Differenz der Oberflächenspannungen (gemäß DIN 53914) zwischen dem zu beschichtenden, gegebenenfalls vorbehandelten Papier, Karton, Pappe und Papier-Oberfläche von Papierverbundmaterialien und der Beschichtung in ihrer aufzutragenden Form mindestens 10 mN/m, bevorzugt mindestens 20 mN/m beträgt und wobei die Beschichtungszusammensetzung eine Wachskomponente und ein copolymeres Bindemittel enthält wobei das Bindemittel aus mindestens zwei der folgenden Monomere aufgebaut ist: Acrylate, Methacrylate, Vinylacetat, Vinylalkohol, Ethylen, Propylen, Butadien, Styrol, Acrylsäure, Methacrylsäure, Acrylamid und Acrylnitril und wobei die Differenz der Oberflächenspannungen der beiden Bestandteile in ihrer aufzutragenden Form mindestens 5 mN/m, bevorzugt mindestens 10 mN/m beträgt.

Die erfindungsgemäße Lösung der Aufgabe ist überraschend, weil sich die Verhältnisse der freien Oberflächenenergienin den beanspruchten Systemen wesentlich ungünstiger darstellen als im Falle der eingangs zitierten Beschichtungen von Metallen. Zum einen weist der Papier-Untergrund mit ca. 60 mN/m eine im Vergleich zu Metallen viel niedrigere Oberflächenspannung auf; zum anderen benötigten insbesondere die wässrigen Beschichtungs-Systeme Stabilisatoren, deren Funktion in der Reduzierung der Grenzflächenspannungen besteht, was einer gezielten Separation der verfilmenden Komponenten an sich entgegen wirkt.

Gegenstand der Erfindung ist auch das beschichtete Papiermaterial und seine Verwendung für die Herstellung wasserdampf- und aromadichter Verpackungen.

Als Basismaterial für Papier, Karton und Pappe können bekannterweise Holzschliff, Zellstoff, Getreide-Stroh, Esparto-Gras, Bagasse, Linters, Hadern, Synthese- und Mineralfasern etc. sowie Altpapier eingesetzt werden. Zusätzliche Komponenten sind im allgemeinen Füllstoffe wie Kaolin, Kreide und Titandioxid, Farbstoffe, Pigmente, Bindemittel zur Leimung wie Stärke, Casein und Kunststoff-Dispersionen, optische Aufheller, Retentionsmittel, Netzmittel, Entschäumer, Schleimbekämpfungsmittel, Konservierungsmittel, Antiblockmittel u.a.

Verfahren zur Herstellung und Veredelung von Papier, Karton und Pappe sind bekannt und z.B. in Ullmanns Enzyklopädie der technischen Chemie, Bd. 17, S. 577 bis 635, Verlag Chemie, Weinheim (1979), ausführlich beschrieben.

Als Substrate für die erfindungsgemäßen Beschichtungen können verschiedenste Papiersorten der an sich bekannten Art wie z.B. Druck-, Schreib-, Etiketten-, Pack- und Tapetenpapier verwendet werden. Weniger geeignet sind saugfähige Arten wie Filtrier-, Fließ- und Hygienepapiere, da sie im allgemeinen nicht die Aufbringung einer dichten Lackschicht zulassen. Zu den geeigneten Substraten zählen desweiteren diverse Karton-und Pappensorten wie die bekannten Chromo(ersatz)-, Duplex-, und Triplex-Kartons sowie Leder- und Strohpappen. Auch die Papier-Oberfläche von Papier-Verbundmaterialien läßt sich erfindungsgeäß beschichten.

Die zur Applikation der Beschichtung erfindungsgemäß geeigneten Lösungen, Emulsionen oder Dispersionen enthalten Wachse natürlichen und synthetischen Ursprungs sowie deren Mischungen untereinander. Zu den natürlichen Wachsen zählen dabei z.B. Candelilla-, Carnauba-, Montan-und Paraffin-Wachse, zu den synthetischen u.a. Paraffin-und Polyethylen-Wachse. Solche Verbindungen sind bekannt und z.B. in Ullmanns Encyklopädie der technischen Chemie, Bd. 24, S. 1 bis 49, Verlag Chemie, Weinheim (1983), ausführlich beschrieben.

Einschränkungen hinsichtlich des Schmelzbereiches der erfindungsgemäß einzusetzenden Wachse ergeben sich dadurch, daß einerseits eine genügende Hitzeresistenz der Beschichtung gewährleistet sein muß und andererseits noch eine vollständige Verfilmung beim Beschichten möglich ist. Bevorzugt wird deshalb ein Schmelzbereich zwischen 50 und 120°C, und besonders zwischen 60 und 90°C. In diesem Rahmen erweisen sich auch Mischungen höher und niedriger schmelzender Wachse als effektiv. Hinsichtlich der Teilchengröße der dispergierten oder emulgierten Wachse sind Partikeldurchmesser unter 1,0 µm und insbesondere unter 0,1 µm zu bevorzugen.

Eine besonders bevorzugte Form des Auftrages der Beschichtung bildet wie bereits erwähnt die Applikation aus wäßriger Lösung, Emulsion oder Dispersion. Deshalb kann die Emulgier- bzw. Dispergierbarkeit der erfin-dungsgemäß geeigneten Wachse durch den an sich bekannten Einbau polarer Gruppen verbessert werden (vgl, z.B.: G.A. Russel, J.Am.Chem.Soc., 79 (1957) 3871; M. Irving et al., Polym.Degrad.Stab., 5 (1983) 467; N.G. Gaylord, J.Polym.Sci.Polym.Lett.Ed., 21 (1983) 23-30; A. Neyishi et al., J.Appl.Polym.Sci., 22 (1978) 2953 und A. Hoff, J.Appl.Polym.Sci., 29 (1984) 465). Die Verfahren dazu sind ebenfalls beschrieben (z.B. in: G.M. Gale, Appl. Organomet.Chem., 2 (1988) 17-31).

Die zur Applikation der erfindungsgemäßen Beschichtungen eingesetzten Lösungen, Emulsionen oder Dispersionen enthalten außerdem copolymere Bindemittel, die aus mindestens zwei der folgenden Monomere aufgebaut sind: Acrylate, Methacrylate, Vinylacetat, Vinylalkohol, Ethylen, Propylen, Butadien, Styrol, Acrylsäure, Methacrylsäure, Acrylamid und Acrylnitril. Bevorzugt werden Styrol-Butadien-Acrylnitril- oder Styrol-Butadien-Acrylat-Systeme eingesetzt.

Erfindungsgemäß geeignete Lösungen, Emulsionen oder Dispersionen können auch Mischungen solcher Copolymerisate enthalten.

Die genannten Copolymerisate und Verfahren zu ihrer Herstellung sind bekannt und ausführlich beschrieben (vgl. z.B.: R.W. Lenz, Organic Chemistry of Synthetic High Polymers, Interscience Publishers, New York (1976) oder Encyclopedia of Polymer Science and Engineering, Wiley-Interscience, New York (1985), S. 211 bis 299).

Die Molmassen-Grenzen der erfindungsgemäß geeigneten Copolymerisate ergeben sich u.a. dadurch, daß bei zu geringem Molekulargewicht die Hitzeresistenz der Beschichtung nicht ausreicht und daß bei zu hohem Molekulargewicht Verfilmungsschwierigkeiten beim Beschichten auftreten.

Die Variationsbreite hinsichtlich der Zusammensetzung der erfindungsgemäß geeigneten Copolymerisate wird u.a. dadurch begrenzt, daß die Beschichtung einerseits nicht zu weich sein darf, weil das Papier sonst bei der Lagerung als Rolle verklebt ("verblockt") und andererseits nicht zu spröde, da die Dichtigkeit der Beschichtung sonst infolge mechanischer Beanspruchungen (z.B. durch Knicken) nachlassen kann. Diese Abstufung wird im Falle der oben als bevorzugt bezeichneten Copolymer-Systeme durch das Verhältnis zwischen Butadien-Anteil (Weich-Komponente) und Styrol-Anteil (Hart-Komponente) gesteuert.

Bei der Verwendung von Copolymeren auf der Basis partiell verseiften Polyvinylacetats wird ein Hydrolysegrad von ) 90 % sowie ein Molekulargewicht ) 50.000 gr/mol und bei Acrylat-haltigen Copolymeren eine Molmasse > 150.000 gr/mol bevorzugt.

Die erfindungsgemäß einzusetzenden Copolymerisate können zusätzlich polare Gruppen wie Carboxyl- oder Hydroxyl-reste enthalten, die ihre Emulgier- bzw. Dispergierbarkeit in wässrigen Systemen verbessern und Möglichkeiten zu Vernetzungen bieten. Als Vernetzer stehen u.a. Aziridine, Dialdehyde, Harnstoff- und Melamin-Formaldehyd-Harze, Polyamid-Epichlorhydrin-Harze, Alkalimetall-Hydroxide, Zink- und Zirkonium-Salze und Polycarbonsäuren zur Verfügung. Solche Systeme und Reaktionen sind bekannt und z.B. in P. Moles, Polym. Paint Colour J., 181 (1991) 266 bis 267, 282, und D. Lämmermann, Melliand Textilber., 73 (1992), 274 bis 279, beschrieben.

Auch selbstvernetzende Systeme, die beispielsweise durch den bekannten Einbau von N-Hydroxymethyl-Resten oder wärmehärtbaren Gruppen (vgl. z.B.: K. Pleßke, Kunststoffe, 59 (1969), 247 bis 251) realisiert werden, sind geeignet.

Die erfindungsgemäßen wässrigen Beschichtungszusammensetzungen auf der Basis der beschriebenen Wachse und Copolymerisate können zusätzlich übliche Hilfsstoffe zur Verbesserung der Dispergier- bzw. Emulgierbarkeit der Copolymere enthalten und Stabilisatoren, die einer nachträglichen Koagulation der Polymerteilchen entgegenwirken. Bei den Hilfsstoffen handelt es sich im allgemeinen um anionische, neutrale oder kationische, niedermolekulare, oligomere oder polymere Emulgatoren, Tenside oder Schutzkolloide der an sich bekannten Art (vgl, z.B. Ullmanns Encyklopädie der technischen Chemie, Bd. 2, S. 273 bis 281, Verlag Chemie, Weinheim (1972), oder ebenda Bd. 10, S. 449 bis 473 (1975)). Außerdem können die erfindungsgemäßen Lösungen, Emulsionen oder Dispersionen bekannte Zusatzmittel wie Katalysatoren, Pigmente, Lösungsmittel, Verlaufshilfsmittel, Füllstoffe, Gleitmittel, Abstandshalter usw. umfassen.

Die Überführung der erfindungsgemäß zu verwendenden Copolymere und Wachse bzw. deren Mischungen in eine wässrige Lösung, Emulsion oder Dispersion wird nach bekannten Verfahren entweder durch Lösen in einem mit Wasser mischbaren Lösungsmittel wie Aceton oder Tetrahydrofuran und anschließendem Zusatz von Wasser und Entfernung des Lösungsmittels oder durch Anwendung hoher Scherkräfte, z.B. mit einem Ultra-Turrax-Rührer unter Verwendung von Düsen oder Dissolverscheiben, vollzogen.

Die zur Applikation der erfindungsgemäßen Beschichtungen eingesetzten Lösungen, Emulsionen oder Dispersionen enthalten 10 bis 60 X, bevorzugt 20 bis 35 % des copolymeren Bindemittels (bezogen auf den Feststoff-Anteil) und 3 bis 50 %, bevorzugt 5 bis 20 % der Wachs-Komponente (bezogen auf das Copolymer). Der Konzentrationsbereich wird in der Praxis vor allem durch die Viskosität begrenzt, die zwischen 50 und 60 mPas·sec liegen sollte, um einen optimalen Lackauftrag zu gewährleisten.

Wie eingangs erläutert ist bei einer Mehrschichtlackierung durch einmaligen Materialauftrag entscheidend, daß die Einzelkomponenten des Beschichtungssystems bezüglich ihrer Oberflächenspannungen in geeigneter Weise abgestuft sind, um einen eindeutigen Lackaufbau zu erzielen. Für die erfindungsgemäße Beschichtung müssen das copolymere Bindemittel und die Wachskomponente eine Oberflächenspannungsdifferenz von mindestens 5 mNlm, bevorzugt mindestens 10 mN/m aufweisen; die Differenz zwischen der Beschichtungsdispersion und dem Untergrund soll mindestens 10 mN/m, bevorzugt mindestens 20 mNlm betragen.

Die Messung der Oberflächenspannungs-Werte erfolgt gemäß DIN 53914.

Die erfindungsgemäßen Beschichtungen können ein- oder beidseitig aufgetragen werden, wobei als Applikationsformen Spritzen, Walzen, Rakeln, Gießen, Streichen, Tauchen und Drucken möglich sind.

Nach dem Trocknen durch Hitzeeinwirkung weist die Beschichtung ein Flächengewicht von 5 bis 50 g/m², bevorzugt 15 bis 40 g/m² auf.

Wie den unten angegebenen Beispielen zu entnehmen ist, kommt es bezüglich der Barriere-Eigenschaften der erfindungsgemäßen Beschichtung zu synergistischen Effekten zwischen Wachs und copolymerem Bindemittel. Die durch die Kombination der beiden Komponenten zu erzielenden Sperrwirkungen sind wesentlich besser als es aufgrund einer Addition der Barriere-Effekte der Einzelkomponenten zu erwarten wäre.

Die Wasserdampf-Durchlässigkeit (gemäß DIN 53122, 23°C, 85 % r.F.) beträgt höchstens 80 g/m²·24 h, bevorzugt höchstens 20 g/m²·24 h und besonders bevorzugt höchstens 10 g/m²·24 h.

Als Maß für die Aromadichtigkeit wird in der Papierindustrie häufig die Luftdurchlässigkeit nach Gurley herangezogen, die angibt, in welcher Zeit 100 mL Luft bei 10 mbar Prüfdruck durch eine Fläche von 100 cm² des zu untersuchenden Papiers diffundieren. Durch die erfindungsgemäßen Beschichtungen werden bei 23°C und 65 % r.F. Werte von > 150 sec, bevorzugt ) 300 sec und besonders bevorzugt > 500 sec erreicht.

Mit Hilfe der Wachs-Komponente können neben der in Kombination mit dem Bindemittel zu erzielenden Barrierewirkung auch die Siegeleigenschaften der Beschichtung eingestellt werden. Den Beispielen ist zu entnehmen, daß durch Verwendung bestimmter Paraffin-haltiger Wachse bei Temperaturen ab 110°C Siegelfestigkeiten (Lack/Lack, 5 bar, 0,5 sec) von ) 1,5 N/15 mm, bevorzugt > 2 N/15 mm und besonders bevorzugt > 3 N/15 mm in Abhängigkeit von der Siegeltemperatur erreicht werden.

Bei gestrichenen Papier-Qualitäten führt die Beschichtung außerdem zu einer guten Resistenz gegenüber fettigen und feuchten Füllgütern wie sich in den Beispielen mit Hilfe des Auftrags von heißem Olivenöl und Wasser zeigen läßt.

Die erfindungsgemäß beschichteten Substrate werden z.B. für Lebensmittel-Verpackungen, Schnittblumen-Verpackungen sowie für empfindliche Schüttgüter eingesetzt.

Die vorliegende Erfindung soll anhand der nachfolgenden Ausführungsbeispiele näher erläutert werden.

### Beispiel 1

Als zu beschichtendes Material wird Kraftpapier braun, mittelglatt, 380 g/m² (Fa. Neustadt Papier, D-7820 Titisee-Neustadt) verwendet. Die Beschichtung geschieht auf der gestrichenen Seite eines plan liegenden, ca. DIN A4 großen Blattes mit Hilfe einer Rakel. Es wird eine wässrige Dispersion aufgetragen, die 30 % eines Copolymers aus Styrol, Butadien und Acrylnitril (Styrofan^{®} LD 600 S; BASF AG, D-6700 Ludwigshafen; a = 47,6 mN/m) und 10 % (bezogen auf das Copolymer) eines Carnauba-Wachses (Ultralube W^{®} 7090; Fa. Surface Chemie, D-5448 Kastellaun; Fp. 84°C; σ = 34,3 mN/m) enthält. Die Trocknung erfolgt im Umlufttrockenschrank bei 150°C bis zu einer Oberflächentemperatur von 130°C.

Es wird eine flexible, nicht klebende, gut haftende Auflage mit einem Flächengewicht von ca. 23 g/m² erhalten, die einen WDDU-Wert von 8 g/m²·24 h und eine nicht messbare geringe Gurley-Luftdurchlässigkeit liefert. Gegenüber aufgetropftem Olivenöl (120°C) oder Wasser (23°C) bleibt das beschichtete Papier mehr als eine Stunde undurchlässig.

Das unbeschichtete Material ergibt einen WDDU-Wert von 890 g/m²·24 h und eine Gurley-Luftdurchlässigkeit von 136 sec/100 mL. Das Auftropfen von Olivenöl (120°C) oder Wasser (23°C) führt innerhalb einer Stunde zum vollflächigen Durchschlag.

### Beispiel 2

Ensprechend Beispiel 1 wird Papier lackiert, wobei die Beschichtung auf der ungestrichenen Seite und anstelle des in Beispiel 1 eingesetzten Systems mit einer wässrigen Dispersion erfolgt, die 45,4 % Styrofan LD 600 S (vgl. Beispiel 1) und 10 % (bezogen auf das Copolymer) eines Paraffin-Wachses (Mobil EXD 80/338; Fa. Mobil Oil, D-2000 Wedel; Fp. 75°C; σ = 35,6 mN/m) enthält.

Es wird eine flexible, nicht klebende, gut haftende Auflage mit einem Flächengewicht von ca. 16 g/m² erhalten, die einen WDDU-Wert von 10 g/m²·24 h und eine Gurley-Luftdurchlässigkeit von 438 sec/100 mL liefert. Die Beschichtung ergibt eine Siegelfestigkeit vcn 1,6 N/15 mm bei 110°C und 2,8 N/15 mm bei 120°C. Das Auftropfen von Olivenöl (120°C) oder Wasser (23°C) führt innerhalb einer Stunde bis auf zwei punktförmige Stellen nicht zum Durchschlag.

Die Werte für das unbeschichtete Material entsprechen Beispiel 1. Das Papier ist nicht siegelbar und zeigt nach dem Auftropfen von Olivenöl (120°C) oder Wasser (23°C) innerhalb einer Stunde einen vollflächigen Durchschlag.

### Beispiel 3

Als zu beschichtendes Material wird 100%iges Altpapier, Petersliner, 140 g/m² (Fa. Peters Papier, D-4650 Gelsenkirchen) verwendet. Die Beschichtung erfolgt entsprechend Beispiel 1, g wobei anstelle des dort eingesetzten Systems eine wässrige Dispersion appliziert wird, die 41,7 % Styrofan LD 600 S (vgl. Beispiel 1) und 10 % (bezogen auf das Copolymer) Ultralube W 7090 (vgl. Beispiel 1) enthält.

Es wird eine flexible, nicht klebende, gut haftende Auflage mit einem Flächengewicht von ca. 15 g/m² erhalten, die einen WDDU-Wert von 25 g/m²·24 h und eine Gurley-Luftdurchlässigkeit von 174 sec/100 mL liefert.

Das unbeschichtete Material ergibt einen WDDU-Wert von 1253 g/m²·24 h und eine Gurley-Luftdurchlässigkeit von 1,7 sec/100 mL.

### Beispiel 4

Entsprechend Beispiel 3 wird Papier lackiert, wobei die Beschichtung anstelle des dort eingesetzten Systems mit einer wäßrigen Dispersion erfolgt, die 45,4 % Styrofan LD 600 S (vgl. Beispiel 1) und 10 % (bezogen auf das Copolymer) Mobil EXD 80/338 (vgl. Beispiel 2) enthält.

Es wird eine flexible, nicht klebende, gut haftende Auflage mit einem Flächengewicht von ca. 12 g/m² erhalten, die einen WDDU-Wert von 42 g/m²·24 h und eine Gurley-Luftdurchlässigkeit von 183 sec/100 mL liefert. Die Beschichtung ergibt eine Siegelfestigkeit von 1,8 N/15 mm bei 110°C und 3,0 N/15 mm bei 120°C.

Die Werte für das unbeschichtete Material entsprechen Beispiel 3.

## Patentansprüche

1. Durch einmaligen Auftrag aufzubringende, aus mehreren Komponenten bestehende wäßrige und organohalogenfreie Beschichtungszusammensetzung für Papier, die zur Ausbildung einer Mehrschichtstruktur führt, dadurch gekennzeichnet, daß die Differenz der Oberflächenspannungen (gemäß DIN 53914) zwischen dem zu beschichtenden, gegebenenfalls vorbehandelten Papier, Karton, Pappe und Papier-Oberfläche von Papierverbundmaterialien und der Beschichtung in ihrer aufzutragenden Form mindestens 10 mN/m, bevorzugt mindestens 20 mN/m beträgt und wobei die Beschichtungszusammensetzung eine Wachskomponente und ein copolymeres Bindemittel enthält, wobei das Bindemittel aus mindestens zwei der folgenden Monomere aufgebaut ist: Acrylate, Methacrylate, Vinylacetat, Vinylalkohol, Ethylen, Propylen, Butadien, Styrol, Acrylsäure, Methacrylsäure, Acrylamid und Acrylnitril und wobei die Differenz der Oberflächenspannungen der beiden Bestandteile in ihrer aufzutragenden Form mindestens 5 mN/m, bevorzugt mindestens 10 mN/m beträgt.

2. Beschichtungszusammensetzung nach Anspruch 1, dadurch gekennzeichnet, daß das Wachs zwischen 50°C und 120°C, bevorzugt zwischen 60 und 90°C schmilzt.

3. Beschichtungszusammensetzung nach Anspruch 2, dadurch gekennzeichnet, daß das Wachs ein Paraffinwachs ist.

4. Beschichtungszusammensetzung nach einem der Ansprüche 1 bis 3, dadurch gekennzeichnet, daß der Wachsanteil 3 bis 50 %, bevorzugt 5 bis 20 % (bezogen auf das Copolymer) beträgt.

5. Papiermaterial mit einer Beschichtung einer Zusammensetzung gemäß einem der Ansprüche 1 bis 4.

6. Verwendung von Papiermaterial gemäß Anspruch 5 für die Herstellung wasserdampf- und aromadichter Verpackungen.

7. Verwendung gemäß Anspruch 6 für fette und feuchte Füllgüter.

## Claims

1. An aqueous and organohalogen-free, multi-component coating composition for paper, applied as a single coating, which leads to the formation of a multilayer structure, characterised in that the difference in the surface tensions (in accordance with DIN 53914) between the optionally pretreated paper, cardboard, paperboard and paper surface to be coated which constitute paper composite materials and the coating in the form in which it is applied is at least 10 mN/m and preferably at least 20 mN/m, the coating composition containing a wax component and a copolymeric binder, the binder being composed of at least two of the following monomers: acrylates, methacrylates, vinyl acetate, vinyl alcohol, ethylene, propylene, butadiene, styrene, acrylic acid, methacrylic acid, acrylamide and acrylonitrile, and the difference in the surface tensions of the two components in the form in which they are applied being at least 5 mN/m and preferably at least 10 mN/m.

2. A coating composition according to claim 1, characterised in that the wax melts between 50°C and 120°C and preferably between 60°C and 90°C.

3. A coating composition according to claim 2, characterised in that the wax is a paraffin wax.

4. A coating composition according to one of claims 1 to 3, characterised in that the proportion of wax is 3 to 50% and preferably 5 to 20% (based on the copolymer).

5. A paper material having a coating of a composition according to one of claims 1 to 4.

6. The use of paper material according to claim 5 for the production of packagings impermeable to water vapour and aromas.

7. The use according to claim 6 for greasy and moist products.

## Revendications

1. Composition d'enduction aqueuse et exempte de composés organo halogénés, destinée à du papier, constituée par plusieurs composants et à appliquer en une seule couche, qui donne lieu à la formation d'une structure multicouche, caractérisée en ce que la différence des tensions superficielles (conformément à la norme DIN 53914) entre le papier, le carton, le carton-pâte et la surface du papier de matières composites comportant du papier, à enduire et ayant éventuellement subi un prétraitement, et l'enduction dans sa forme à appliquer s'élève à au moins 10 mN/m, de préférence à au moins 20 mN/m, et dans laquelle la composition d'enduction contient un composant de cire et un liant copolymère, le liant étant constitué par au moins deux des monomères ci-après: des acrylates, des méthacrylates, l'acétate de vinyle, l'alcool vinylique, l'éthylène, le propylène, le butadiène, le styrène, l'acide acrylique, l'acide méthacrylique, l'acrylamide et l'acrylonitrile, et dans laquelle la différence des tensions superficielles des deux constituants dans leur forme à appliquer s'élève à au moins 5 mN/m, de préférence à au moins 10 mN/m.

2. Composition d'enduction selon la revendication 1, caractérisée en ce que la cire possède un point de fusion-entre 50°C et 120°C, de préférence entre 60 et 90°C.

3. Composition d'enduction selon la revendication 2, caractérisée en ce que la cire est une cire de paraffine.

4. Composition d'enduction selon les revendications 1 à 3, caractérisée en ce que la fraction de cire s'élève de 3 à 50%, de préférence de 5 à 20% (rapportés au copolymère) .

5. Matière de papier munie d'une composition d'enduction selon l'une quelconque des revendications 1 à 4.

6. Utilisation d'une matière de papier selon la revendication 5 pour la fabrication d'emballages étanches à la vapeur d'eau et aux arômes.

7. Utilisation selon la revendication 6, pour des matières de remplissage grasses et humides.
